# EUROPEAN PATENT SPECIFICATION

(11) **EP 1 591 681 B1**
(45) Date of publication and mention of the grant of the patent: **20.02.2008**
(21) Application number: 05007311.3
(22) Date of filing: 04.04.2005
(51) Int. Cl.: F16C 17/18, F16C 3/12, F16C 9/00

(54) **Bearing structure**
Lageranordnung
Structure de palier

(30) Priority: 26.04.2004 JP 2004130271
(43) Date of publication of application: 02.11.2005
(73) Proprietor: HONDA MOTOR CO., LTD., Tokyo (JP)
(72) Inventor: Endoh, Tsuneo, Wako-shi, Saitama (JP); Kimura, Hidemi, Wako-shi, Saitama (JP); Ishimitsu, Kengo, Wako-shi, Saitama (JP)
(74) Representative: Prechtel, Jörg

(56) References cited:
- EP-A- 0 131 383
- DE-A1- 2 550 031
- DE-C- 846 345
- GB-A- 2 021 701
- US-A- 2 532 795
- PATENT ABSTRACTS OF JAPAN vol. 1995, no. 08, 29 September 1995 (1995-09-29) & JP 07 127632 A (SUZUKI MOTOR CORP), 16 May 1995 (1995-05-16)

## Description

The present invention relates to a bearing structure for an internal combustion engine.

A conventional bearing structure, as disclosed in, for example, JP-A-7-127632, includes a plain bearing and a rotational ring including plural pieces connected together and disposed within an annular space defined between an outer periphery of a crankshaft and an inner periphery of the plain bearing. The bearing structure disclosed in JP-A-7-127632 will be explained with reference to Fig. 8 hereof.

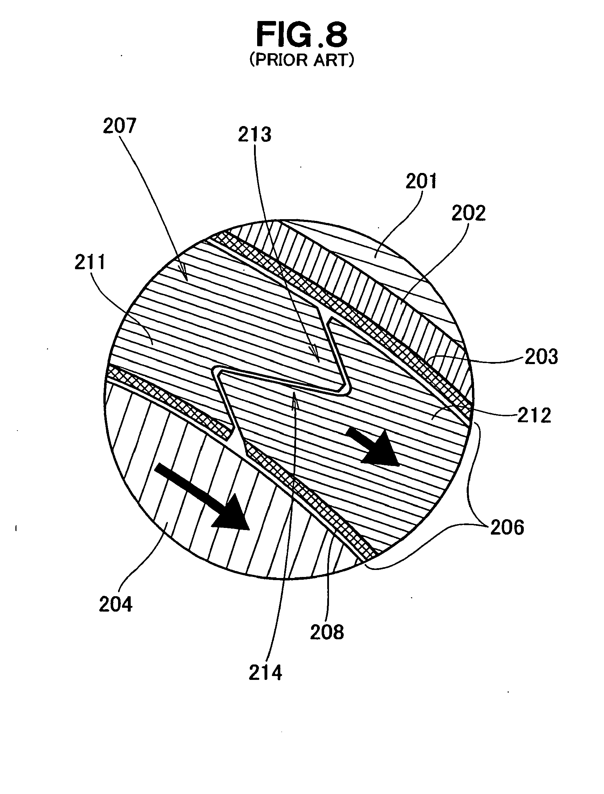

Referring to Fig. 8, there is shown a cylinder block side bearing retaining portion 201 of a cylinder block (not shown). Attached to the retaining portion 201 is a bearing cap (not shown). A plain bearing 202 is crimped against an inside surface of the cylinder block side bearing retaining portion 201 and an inside surface of the bearing cap. The plain bearing 202 has its inner periphery to which a first bearing member 203 is connected by pressure welding. A crankshaft 204 is disposed inside the first bearing member 203. A space 206 is defined between the first bearing member 203 and the crankshaft 204. A rotational ring 207 is disposed within the space 206. A second bearing member 208 is provided integrally with an inner periphery of the rotational ring 207. The rotational ring 207 is rotatably disposed within the space 206.

The rotational ring 207 is halved into a first rotational ring member 211 and a second rotational ring member 212. Reference numeral 213 denotes a first engaging portion formed on the first rotational ring member 211 and reference numeral 214 denotes a second engaging portion formed on the second rotational ring member 212.

For operating an engine at a high speed, a crankshaft of the engine rotates at an increased speed and, therefore, friction loss is increased. To solve this problem associated with the friction loss, in the bearing structure disclosed in JP-A-7-127632, the rotational ring 207 is rotatably disposed within the space 206 for providing a reduced rotational speed of the rotational ring 207.

For the conventional bearing structure disclosed in JP-A-7-127632, the rotational ring 207 is divided into two pieces, that is, the first and second rotational ring members 211, 212, as described above. The first rotational ring member 211 and the second rotational ring member 212 are assembled together with the first engaging portion 213 engaging the second engaging portion 214. However, this assembling operation is difficult to perform. Also, the rotational ring 207 has its own shape and structure which are complicated, and therefore requires a high cost.

Further, the rotational ring 207 is small in rigidity because the ring 207 is divided into the first rotational ring member 211 and the second rotational ring member 212. The rotational ring 207 having the small rigidity can be greatly deformed under the action of a radial load, and pressure of oil films can be decreased with the result that the rotational ring 207 undesirably can not bear a large load.

If the crankshaft 204 is rendered thin for operating an engine at a high speed, friction between the crankshaft 204 and the rotational ring 207 can be reduced. However, the thin crankshaft 204 has such a low natural frequency that a resonance of the crankshaft 204 easily occurs during use of the high speed engine. Thus, if the crankshaft 204 is rendered thin, durability of the crankshaft 204 would be adversely affected. Otherwise, if the crankshaft 204 is made great in diameter and rigidity for increasing natural frequency of the crankshaft 204, the resonance of the crankshaft 204 does not easily occur. However, since the rotational speed of the crankshaft increases, a friction or wearing amount of the crankshaft 204 undesirably increases.

GB-A-2 021 701 discloses a bearing structure in accordance with the preamble of claim 1. There, one oil bore extends through the crankshaft for supplying the bearing with oil.

It is an object of the invention to provide an easy-to-assemble, inexpensive bearing structure which can provide a low rotational speed of a bearing and increase rigidity of a crankshaft for satisfying mutually contradictory two requirements, one for rotating the crankshaft at a high speed the other for reducing friction loss of the crankshaft.

According to the present invention, there is provided a bearing structure comprising: bearing portions; shaft portions of a crankshaft constituting one part of an internal combustion engine, the shaft portions being located at portions corresponding to the bearing portions; and floating bearings each formed as a single piece and disposed between the shaft portion and the bearing portion, the floating bearings each having oil films formed on a side of the shaft portion and on a side of the bearing portions, respectively, wherein one shaft portion is a crankpin of the crankshaft and the bearing portion is a big end of a connecting rod; and wherein two further shaft portions are journals of the crankshaft and the bearing portions are main bearing portions provided on a side of a cylinder block, characterized in that hollow portions are defined in each shaft portion, and a plurality of small oil holes extending inward from an outer peripheral surface of each shaft portion and opening to the respective hollow portion, wherein each shaft portion has a through hole formed on one tip end portion thereof and opening to the hollow portion and an oil hole formed on the opposite tip end portion thereof and opening to the hollow portion such that the hollow portions are connected to each other.

Because the floating bearing disposed between the shaft portion of the crankshaft and the bearing portion is formed as a single piece, the bearing structure can be simply constructed, that is, the bearing structure can be made of the small number of components and can be assembled easily. Further, because the floating bearing is formed as a single piece, the floating bearing has increased rigidity. In other words, the floating bearing can be deformed by only a small amount and hence can bear an increased load. Furthermore, because the floating bearing acts in such a manner as to reduce friction loss or wearing amount of the shaft portion and the bearing portion even when the shaft portion of the crankshaft and the bearing portion are enlarged in diameter for providing increased rigidity, the internal combustion engine can have increased durability and operate at a high speed.

As the one shaft portion is a crankpin of the crankshaft and the bearing portion is a big end of a connecting rod, it becomes possible to reduce friction loss of the crankpin of the crankshaft and the big end of the connecting rod while operating the internal combustion engine at a high speed.

As two further shaft portions are journals of the crankshaft and the bearing portions are main bearing portions provided on a side of the cylinder block, it becomes possible to reduce friction loss of the journals of the crankshaft and the main portion.

A certain preferred embodiment of the present invention will hereinafter be described in detail, by way of example only, with reference to the accompanying drawings, in which:
Fig. 1 is a cross-sectional view of an internal combustion engine employing a bearing structure according to the present invention;
Fig. 2 is a view showing in detail a cross-section of a crankshaft shown in Fig. 1;
Fig. 3 is a perspective view of an assemblage of a piston, a connecting rod and the crankshaft shown in Fig. 1;
Fig. 4A and Fig. 4B show in side elevation respective shafts of the crankshaft;
Fig. 5 shows a floating bearing fitted around the crankpin shown in Fig. 1;
Fig. 6 is fragmentary view showing, on enlarged scale, how the floating bearing shown in Fig. 5 is fitted around the crankpin;
Fig. 7A through Fig. 7C show a manner of assembling the crankshaft according to the present invention; and
Fig. 8 is a cross-sectional view of a conventional bearing structure.

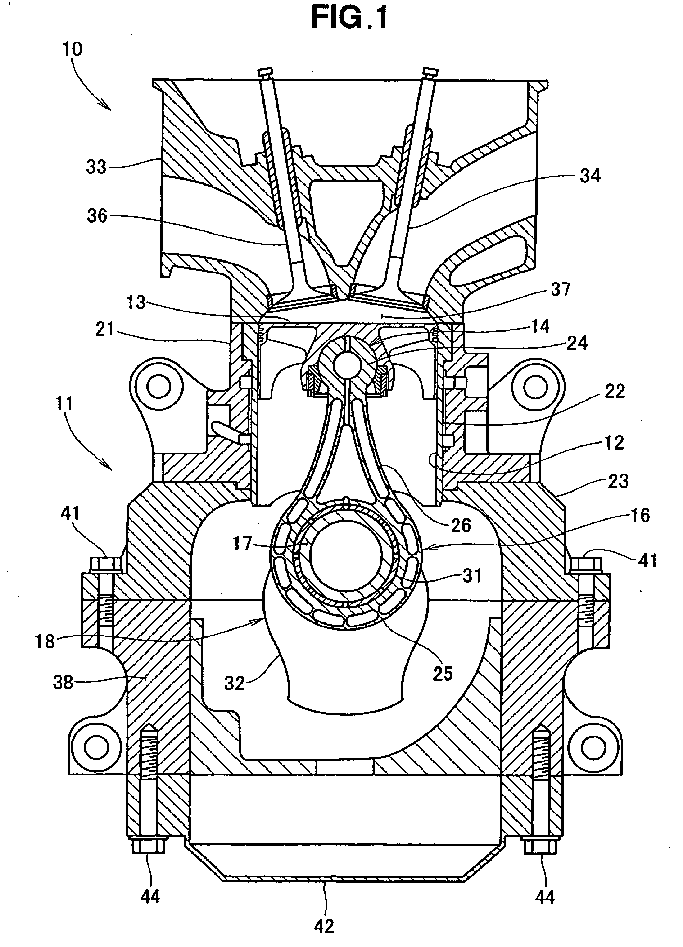

Initial reference is made to Fig. 1 showing an internal combustion engine 10 employing a bearing structure according to the present invention. The internal combustion engine 10 includes a cylinder block 11, a piston 13 movably inserted within a cylinder bore 12 of the cylinder block 11, a connecting rod 16 connected via a spherical joint 14 to the piston 13, and an assembled crankshaft 18 rotatably attached to a lower part of the cylinder block 11 and having a hollow crankpin 17 supported by the connecting rod 16.

The cylinder block 11 includes a cylinder portion 21 provided in an upper part thereof, a tubular sleeve 22 fitted into the cylinder portion 21 and defining the cylinder bore 12, and an upper crankcase member 23 attached to a bottom of the cylinder portion 21.

The connecting rod 16 is formed as a single piece including a small end 24 connected to the piston 13, a big end 25 connected to the crankpin 17, and a rod portion 26 interconnecting the small end 24 and the big end 25. The big end 25 of the connecting rod 16 is connected to the crankpin 17 through a floating bearing 31.

The crankshaft 18 has a counterweight 32. A cylinder head 33 is attached through a cylinder head gasket (not shown) to a top of the cylinder block 11. Reference numeral 34 denotes an intake valve, reference numeral 36 denotes an exhaust valve, and reference numeral 37 denotes a combustion chamber. A lower crankcase member 38 is attached to a bottom of the upper crankcase member 23 through plural bolts 41 to form a crankcase. An oil pan (sump) 42 is attached through plural bolts 44 to a bottom of the lower crankcase 38.

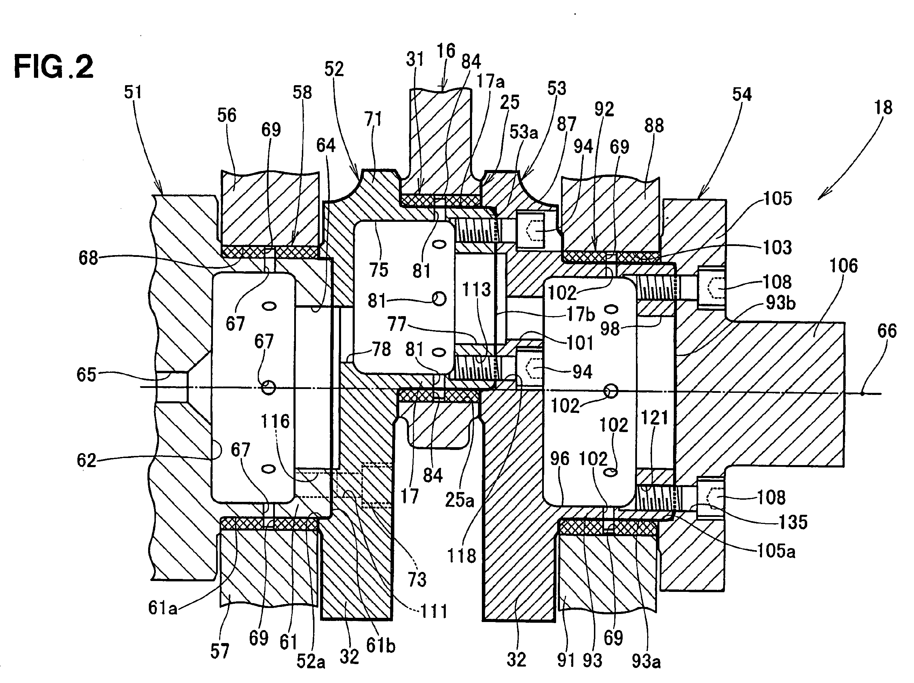

Fig. 2 shows in cross-section the crankshaft 18. The crankshaft 18 is made by assembling first, second, third and fourth shafts 51, 52, 53, 54 arranged in order in a direction from one end of the crankshaft 18 to the opposite end of the crankshaft 18. The second and third shafts 52, 53 have their outlines shown by bold lines for the purpose of easy understanding of their shapes.

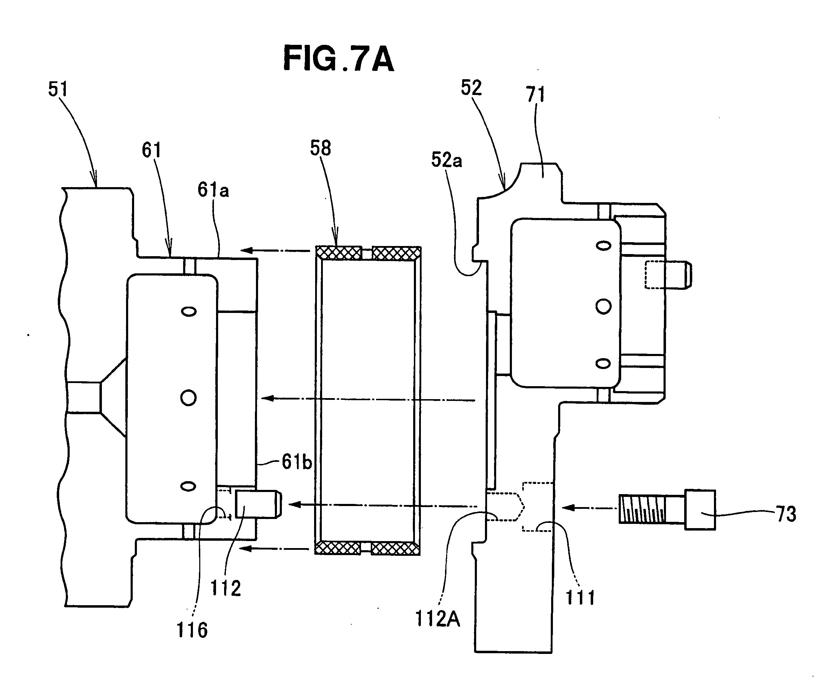

The first shaft 51 includes a first journal 61 supported via a floating bearing 58 by a first main bearing portion 56 provided at the lower part of the cylinder block 11 (Fig. 1) and a bearing portion 57 provided in the lower crankcase member 38 (Fig. 1). It is to be noted that the floating bearing 58 has a cross-section shown by cross-hatching for easy understanding. The first shaft 51 further includes a first knock pin (taper pin) 112 (Fig. 7A) struck into a tip end portion of the first journal 61. The first journal 61 has a hollow portion 62.

The first journal 61 has a through hole 64 formed in the tip end portion thereof and opening to the hollow portion 62. The first shaft 51 has an oil hole 65 formed therein in parallel to an axial line 66 of the crankshaft 18. The oil hole 65 communicates with the hollow portion 62 of the first journal 61. Plural small oil holes 67 extend inward from an outer peripheral surface 61a of the first journal 61 and opens to the hollow portion 62.

The floating bearing 58 is rotatably fitted around the outer peripheral surface 61a of the first journal 61 and within a bearing hole 68 defined between the first main bearing portion 56 and the bearing portion 57. Reference numeral 69 denotes plural small oil holes formed in the floating bearing 58.

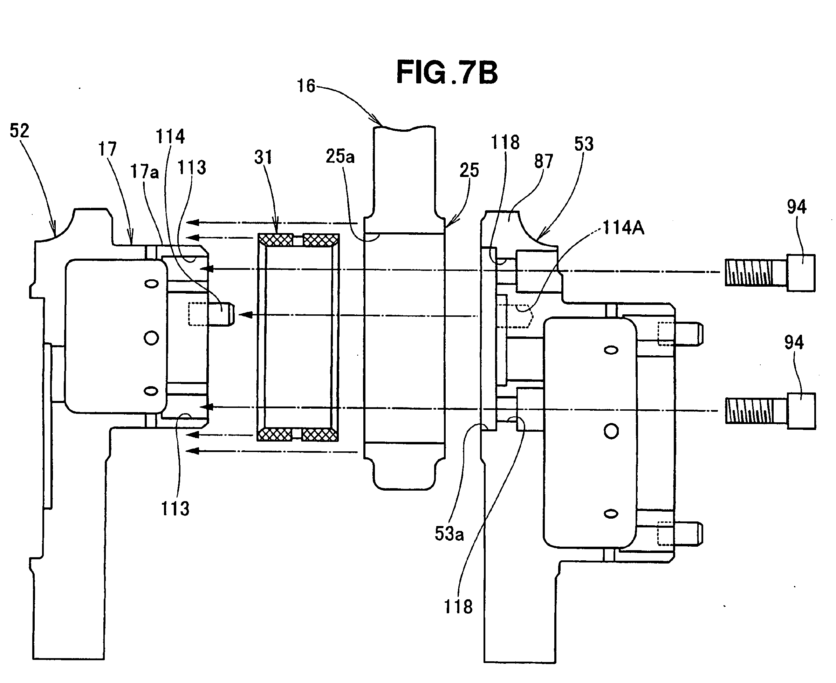

The second shaft 52 includes an arm portion 71 fitted with the first journal 61 of the first shaft 51, the hollow crankpin 17 integral with the arm portion 71 and radially offset or displaced from the axial line 66, the counterweight 32 integral with the arm portion 71 and located on one side of the axial line 66 oppositely from the crankpin 17, and a second knock pin (taper pin) 114 (Fig. 7B) struck into a tip end portion of the crankpin 17. The second shaft 51 is attached to the first journal 61 of the first shaft 51 through plural bolts 73. In the arm portion 71 and the crankpin 17, there is defined a hollow portion 75.

Reference numeral 77 denotes a through hole extending inward from the tip end portion of the crankpin 17 and opening to the hollow portion 75. The second shaft 52 has an oil hole 78 communicating with the through hole 64 formed in the first shaft 51. The crankpin 17 has plural small oil holes 81 extending inward from an outer peripheral surface 17a of the crankpin 17 and opening to the hollow portion 75.

The first shaft 51 and the second shaft 52 are located in place with the first journal 61 fitted into a fitting hole 52a formed in the second shaft 52. The first knock pin 112 prevents the first shaft 51 and the second shaft 52 from rotating relative to each other.

The floating bearing 31 is rotatably fitted around the outer peripheral surface 17a of the crankpin 17 and within a big end hole 25a formed in the big end 25 of the connecting rod 16. Reference numeral 84 denotes plural small oil holes formed in the floating bearing 31.

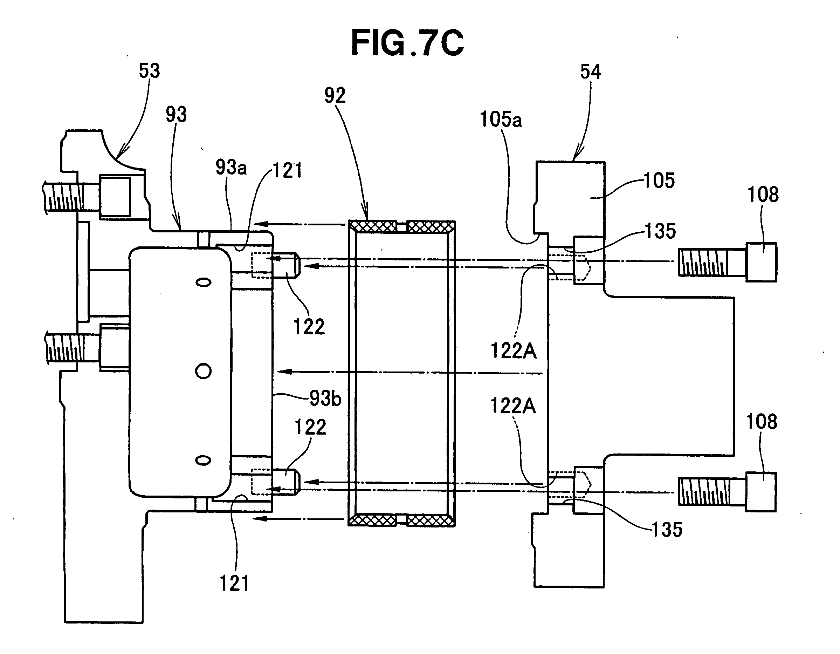

The third shaft 53 includes an arm portion 87 fitted with the crankpin 17 of the second shaft 52, a second journal 93 formed integrally with the arm portion 87, the counterweight 32 formed integrally with the arm portion 87, and third knock pins 122, 122 (Fig. 7C) struck into a tip end portion of the second journal 93. The third shaft 53 is attached to the crankpin 17 of the second shaft 52 through plural bolts 94.

The second journal 93 is supported via a floating bearing 92 by a second main bearing portion 88 provided at the lower part of the cylinder block 11 (Fig. 1) and a bearing portion 91 provided in the lower crankcase member 38.

In the arm portion 87 and the second journal 93, there is defined a hollow portion 96. The second journal 93 has a through hole 98 formed in the tip end portion of the second journal 93 and communicating with the hollow portion 96. The hollow portion 96 communicates with the through hole 77 of the second shaft 52 through an oil hole 101 formed in the arm portion 87. The second journal 93 has plural small oil holes 102 extending inward from an outer peripheral surface 93a of the second journal 93 and communicating with the hollow portion 96.

The second shaft 52 and the third shaft 53 are located in place with the crankpin 17 fitted into a fitting hole 53a formed in the third shaft 53. The second knock pin 114 prevents the second shaft 52 and the third shaft 53 from rotating relative to each other.

The floating bearing 92 is identical to the floating bearing 58 and is rotatably fitted around the outer peripheral surface 93a of the second journal 93 and within a bearing hole 103 defined between the second main bearing portion 88 and the bearing portion 91.

The fourth shaft 54 includes a flange portion 105 and a shaft portion 106 formed integrally with the flange portion 105. The flange portion 105 has a fitting hole 105a. The fourth shaft 54 is located in place with the second journal 93 fitted into the fitting hole 105a. The third knock pins 122, 122 prevent the flange portion 105 and the second journal 93 from rotating relative to each other. The fourth shaft 54 is attached to the second journal 93 through plural bolts 108.

The bearing structure according to the present invention is advantageous in that, since the first and second journals 61, 93 of the crankshaft 18 are supported through the floating bearings 58, 92 between the cylinder block 11 and the lower crankcase member 38 and the crankpin 17 is supported through the floating bearing 31 by the connecting rod 16, friction of the crankshaft 18 during rotation of the crankshaft 18 is small. Thus, a friction loss can be reduced while the crankshaft 18 can rotate at a high speed.

Moreover, rigidity of the crankshaft 18 can be increased by making large diameters of the first and second journals 61, 93 (more specifically, the first and second journals 61, 93 have the diameters of φ 67 while a conventional journal has a diameter of φ 45 to φ 55) and the crankpin 17 (more specifically, the crankpin 17 has the diameter of φ 54 while a conventional crankpin has a diameter of φ 30 to φ 40). Thus, the crankshaft 18 can have improved durability and rotate at a high speed.

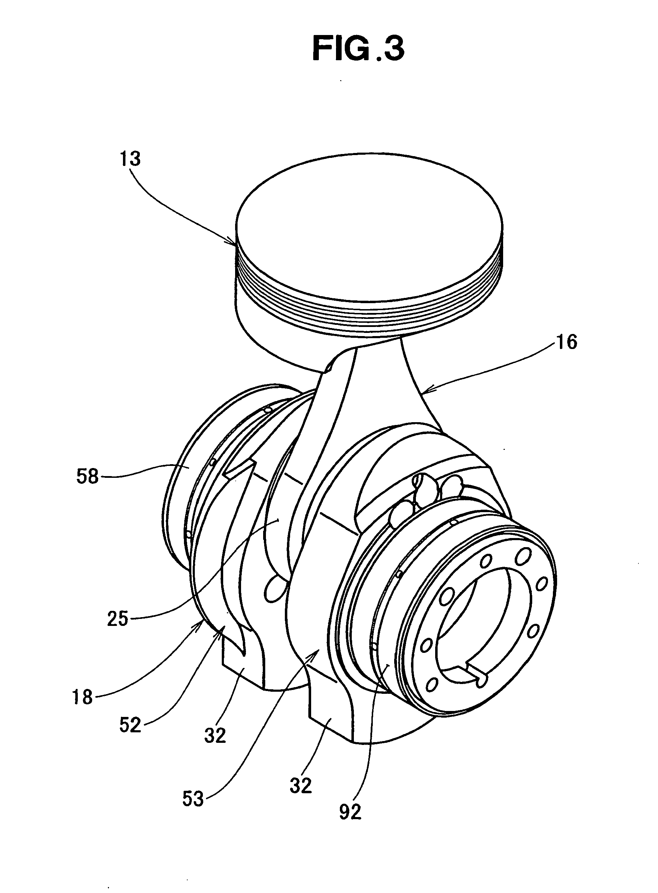

Fig. 3 shows the piston 13, the connecting rod 16 and the crankshaft 18. The connecting rod 16 is swingably mounted on the crankshaft 18 (the second shaft 52 and the third shaft 53). The connecting rod 16 is swingably attached to the piston 13. The floating bearing 58 is fitted around the first journal 61 (Fig. 2). The floating bearing 92 is fitted around the second journal 93.

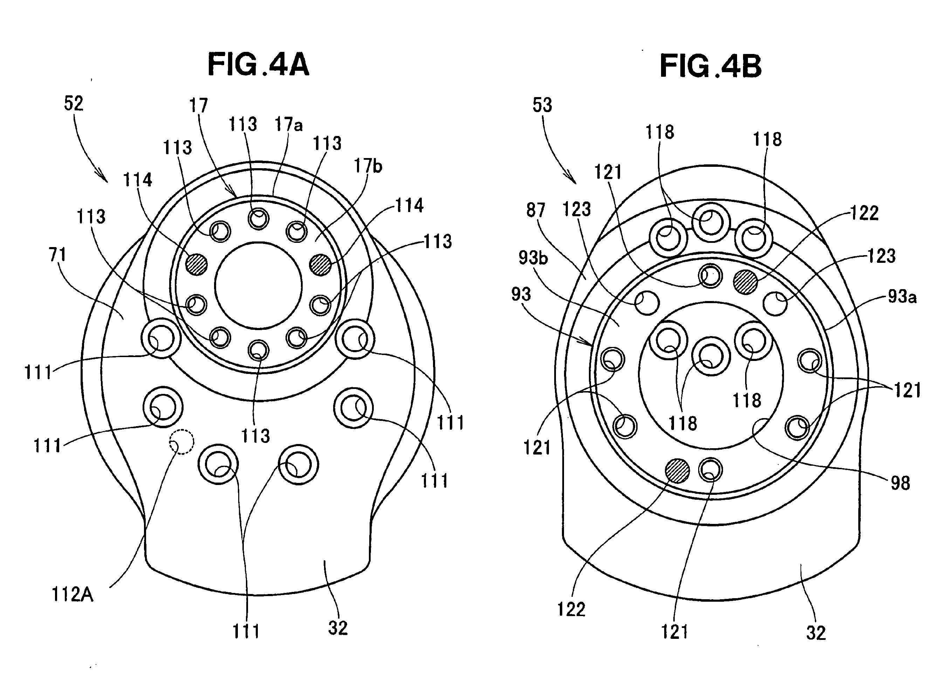

Fig. 4A and Fig. 4B show the second shaft 52 and the third shaft 53, respectively.

The arm portion 71 of the second shaft 52 shown in Fig. 4A has plural bolt holes 111 through which the bolts 73 (Fig. 2) pass for attaching the arm portion 71 to the first shaft 51 (Fig. 2). The arm portion 71 has a first knock pin hole 112A formed on a back side thereof (facing to the first shaft 51). Into the knock pin hole 112A, the first knock pin 112 (Fig. 7A) is inserted to prevent the first shaft 51 and the second shaft 52 from rotating relative to each other. The crankpin 17 has plural internal threads 113 extending inwardly from an end surface 17b thereof. Into the internal threads 113, the bolts 94 are threaded for threadedly engaging the internal threads 113 to attach the third shaft 53 (Fig. 2) to the crankpin 17. The second knock pins 114, 114 (shown by hatching) prevent the second shaft 52 and the third shaft 53 from rotating relative to each other.

As shown in Fig. 2, the first journal 61 of the first shaft 51 has plural internal threads 116 extending inwardly from an end surface 61b thereof. Into the internal threads 116, the bolts 73 are threaded for threadedly engaging the internal threads 116.

The arm portion 87 of the third shaft 53 shown in Fig. 4B has plural bolt holes 118 through which the bolts 94 (Fig. 2) pass for attaching the arm portion 87 of the third shaft 53 to the second shaft 52 (Fig. 4A). The second journal 93 has plural internal threads 121 extending inwardly from an end surface 93b thereof. Into the internal threads 121, the bolts 108 (Fig. 2) are threaded for threadedly engaging the internal threads 121 to attach the fourth shaft 54 (Fig. 2) to the second journal 93. The third knock pins 122, 122 prevent the third shaft 53 and the fourth shaft 54 from rotating relative to each other. The second journal 93 has plural bolt holes 123 formed on the end surface 93b of the second journal 93. The bolts 94 pass through the bolt holes 123 for attaching the third shaft 53 to the second shaft 52.

The bolt holes 118 and the bolt holes 123 are arranged on the same circle.

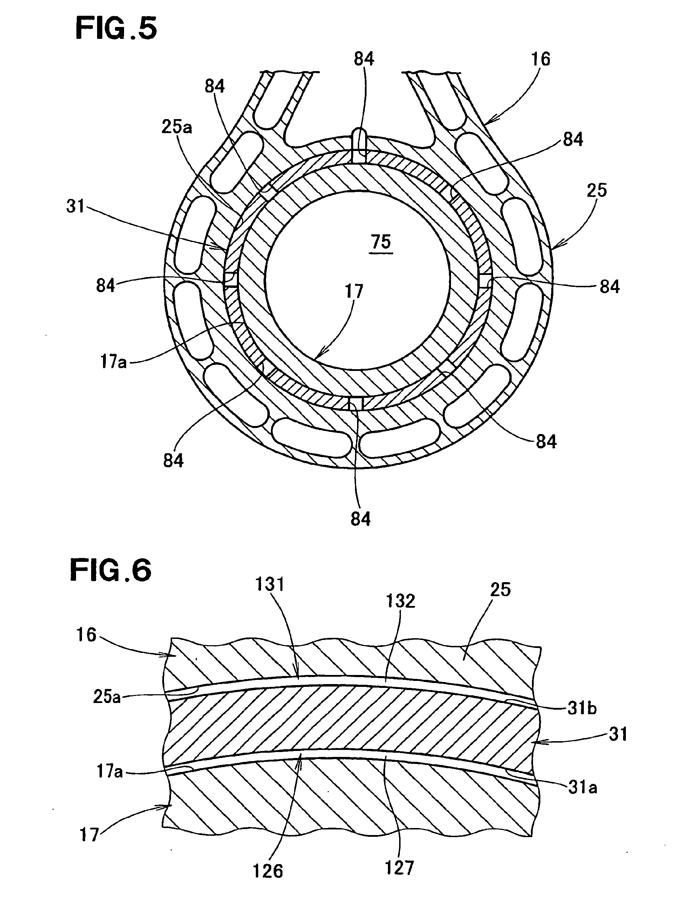

As shown in Fig. 5, the floating bearing 31 is interposed between the outer peripheral surface 17a of the crankpin 17 and an inner peripheral surface of the big end 25 defining the big end hole 25a.

The floating bearing 31 has plural small oil holes 84 circumferentially arranged at equal intervals. Oil is introduced from the hollow portion 75 of the crankpin 17 through the small oil holes 81 (Fig. 2) into the small oil holes 84 of the floating bearing 31. This oil is supplied to a surface of the floating bearing 31.

As shown in Fig. 6, an oil film 127 is disposed within a space or clearance 126 defined between the outer peripheral surface 17a of the crankpin 17 and an inner peripheral surface 31a of the floating bearing 31. An oil film 132 is disposed in a space or clearance 131 defined between an outer peripheral surface 31b of the floating bearing 31 and the inner peripheral surface of the big end 25 defining the big end hole 25a. Thus, the floating bearing 31 is disposed in a floating state between the crankpin 17 and the big end 25 of the connecting rod 16. With this arrangement, during rotation of the crankpin 17 relative to the big end 25, the floating bearing 31 rotates at a velocity which is approximately one-half of the rotational velocity of the crankpin 17, such that friction between the floating bearing 31 and the big end 25 and between the floating bearing 31 and the crankpin 17 is smaller as compared to, for example, a case where the crankpin 17 rotates relative to a plain bearing secured to the big end of the connecting rod. Thus, friction loss of the big end 25 and the crankpin 17 is reduced.

Description will be made as to a manner of assembling the crankshaft 18 with reference to Fig. 7A through Fig. 7C.

As shown in Fig. 7A, firstly, the floating bearing 58 is fitted around the first journal 61 of the first shaft 51. The arm portion 71 of the second shaft 52 is fitted with the first journal 61 such that the first knock pin 112 struck into the tip end portion of the first journal 61 and protruding out of the end surface 61b of the first journal 61 towards the second shaft 52 is fitted into the first knock pin hole 112A formed in the arm portion 71 of the second shaft 52 and such that the tip end portion of the first journal 61 is fitted into the fitting hole 52a of the second shaft 52.

Then, the bolts 73 inserted through the bolt hole 111 of the second shaft 52 is threaded into the internal thread 116 of the first shaft 51 for threadedly engaging the internal thread 116 to assemble the second shaft 52 with the first shaft 51.

Next, as shown in Fig. 7B, the floating bearing 31 is fitted around the crankpin 17 of the second shaft 52. Thereafter, the big end 25 of the connecting rod 16 is fitted around the floating bearing 31, and then the arm portion 87 of the third shaft 53 is fitted with the crankpin 17, such that the second knock pin 114 of the second shaft 52 is fitted into a second knock pin hole 114A formed in the arm portion 87 of the third shaft 53 and such that the tip end portion of the crankpin 17 is fitted into the fitting hole 53a of the third shaft 53.

Subsequently, the bolts 94 inserted through the bolt holes 118, 123 (Fig. 4B) of the third shaft 53 are threaded into the internal threads 113 of the second shaft 52 for threadedly engaging the internal threads 113 to assemble the third shaft 53 with the second shaft 52.

Next, as shown in Fig. 7C, the floating bearing 92 is fitted around the second journal 93 of the third shaft 53. The flange portion 105 of the fourth shaft 54 is fitted with the second journal 93, such that the third knock pins 122, 122 struck into the tip end portion of the second journal 93 are fitted into third knock pin holes 122A, 122A formed in the flange portion 105 of the fourth shaft 54 and such that the tip end portion of the second journal 93 is fitted into the fitting hole 105a of the fourth shaft 54.

Finally, the bolts 108 inserted through plural bolt holes 135 formed in the flange portion 105 of the fourth shaft 54 are threaded into the internal threads 121 of the third shaft 53 for threadedly engaging the internal threads 121 to assemble the fourth shaft 54 to the third shaft 53.

The present invention is characterized in that: (1) the floating bearing 31 formed as a single piece is interposed between the big end 25 acting as a bearing portion and the crankpin 17 acting as a shaft portion of the assembled crankshaft 18 serving as one of components constituting the high speed internal combustion engine 10 (Fig. 1) and has the oil films 127, 132 formed on a side of the crankpin 17 and on a side of the big end 25, respectively; (2) the floating bearing 58 formed as a single piece is interposed between the first journal 61 acting as a shaft portion of the crankshaft 18 and both of the bearing portion 57 and the first main bearing portion 56 acting as a bearing portion and has the oil films 127, 132 formed on a side of the first journal 61 and on a side of the first main bearing 56 and the bearing portion 57, respectively; and (3) the floating bearing 92 formed as a single piece is interposed between the second journal 93 acting as a shaft portion of the crankshaft 18 and both of the bearing portion 91 and the second main bearing portion 88 acting as a bearing portion and has the oil films 127, 132 formed on a side of the second journal 93 and on a side of the second main bearing portion 88 and the bearing portion 91, respectively.

With the above arrangement, the bearing structure has a simple construction composed of the reduced number of components. Thus, it becomes possible to facilitate assemblage of the bearing structure. Since the floating bearings 31, 58, 92 are each formed as a single piece, the respective floating bearings have such high rigidity as to provide small amount of deformation for bearing increased loads. Moreover, the shaft portions 17, 61, 93, the big end hole 25a of the bearing portion 25, the bearing hole 68 defined between the bearing portions 56, 57, and the bearing hole 103 defined between the bearing portions 88, 91 can have enlarged diameters for increased rigidity while friction or wearing amount of the shaft portions and bearing portions can be reduced by virtue of the floating bearings 31, 58, 92. Therefore, the internal combustion engine 10 can have increased durability and operate at a high speed. The bearing structure according to the present invention is useful, especially, when an internal combustion engine operates at a high speed.

A bearing structure is provided for a crankshaft (18) and a connecting rod (16) of an internal combustion engine. A single-piece first floating bearing (31) having oil films (127,132) formed thereon is disposed between a crankpin (17) of the crankshaft and a big end (25) of the connecting rod. A single-piece second floating bearing (58) having oil films formed thereon is disposed between a first journal (61) of the crankshaft and a first main bearing portion (56) provided in a cylinder block. A single-piece third floating bearing (92) having oil films formed thereon is disposed between a second journal (93) of the crankshaft and a second main bearing portion (88) provided in the cylinder block.

## Claims

1. A bearing structure comprising:
bearing portions (25, 56, 88);
shaft portions (17, 61, 93) of a crankshaft (18) constituting one part of an internal combustion engine, the shaft portions being located at portions corresponding to the bearing portions; and
floating bearings (31, 58, 92) each formed as a single piece and disposed between the shaft portion and the bearing portion, the floating bearings each having oil films (127,132) formed on a side of the shaft portion and on a side of the bearing portions, respectively, wherein one shaft portion is a crankpin (17) of the crankshaft (18) and the bearing portion is a big end (25) of a connecting rod (16); and wherein two further shaft portions are journals (61, 93) of the crankshaft and the bearing portions are main bearing portions (56, 88) provided on a side of a cylinder block,
**characterized in that** hollow portions (75, 62, 96) are defined in each shaft portion (17, 61, 93), and a plurality of small oil holes (81, 67, 102) extending inward from an outer peripheral surface (17a, 61a, 93a) of each shaft portion (17, 61, 93) and opening to the respective hollow portion (75, 62, 96),
wherein each shaft portion (61, 17, 93) has a through hole (64, 77, 98) formed on one tip end portion thereof and opening to the hollow portion (62, 75, 96) and an oil hole (65, 78, 101) formed on the opposite tip end portion thereof and opening to the hollow portion (62, 75, 96) such that the hollow portions (62, 75, 96) are connected to each other.

2. The bearing structure as recited in claim 1, wherein each of the small oil holes (81, 67, 102) has one end opening at the respective outer peripheral surface (17a, 61a, 93a) of the shaft portions (17, 61, 93).

3. The bearing structure as recited in claim 1, wherein the crankshaft (18) is an assembled crankshaft composed of four shafts (51, 52, 53, 54) assembled in order in a direction from one end of the crankshaft to the opposite end of the crankshaft such that one shaft portion (61, 17, 93) is fitted in a fitting hole (52a, 53a, 105a) of an adjacent shaft (52, 53, 54).

## Patentansprüche

1. Lageranordnung, umfassend:
Lagerabschnitte (25, 56, 88);
Wellenabschnitte (17, 61, 93) einer Kurbelwelle (18), die einen Teil einer Verbrennungskraftmaschine bildet, wobei die Wellenabschnitte an Abschnitten entsprechend den Lagerabschnitten angeordnet sind; und
Loslager (31, 58, 92), die jeweils als Einzelteil ausgebildet sind und zwischen dem Wellenabschnitt und dem Lagerabschnitt angeordnet sind, wobei die Loslager jeweils Ölfilme (127, 132) aufweisen, die auf einer Seite des Wellenabschnitts bzw. auf einer Seite der Lagerabschnitte ausgebildet sind, wobei ein Wellenabschnitt ein Kurbelzapfen (17) der Kurbelwelle (18) ist und der Lagerabschnitt ein großes Ende (25) eines Pleuels (16) ist; und wobei zwei weitere Wellenabschnitte Lagerzapfen (61, 93) der Kurbelwelle sind und die Lagerabschnitte Hauptlagerabschnitte (56, 88) sind, die auf einer Seite eines Zylinderblocks vorgesehen sind,
**dadurch gekennzeichnet, dass**
hohle Abschnitte (75, 62, 96) in jedem Wellenabschnitt (17, 61, 93) definiert sind, und mehrere kleine Öllöcher (81, 67, 102) sich von einer Außenumfangsoberfläche (17a, 61a, 93a) jedes Wellenabschnitts (17, 61, 93) nach innen erstrecken und in den entsprechenden hohlen Abschnitt (75, 62, 96) münden,
wobei jeder Wellenabschnitt (61, 17, 93) ein Durchgangsloch (64, 77, 98) aufweist, das an einem spitzen Endabschnitt desselben ausgebildet ist und in den hohlen Abschnitt (62, 75, 96) mündet, sowie ein Ölloch (65, 78, 101), das auf dem gegenüberliegenden spitzen Endabschnitt desselben ausgebildet ist und sich in den hohlen Abschnitt (62, 75, 96) erstreckt, so dass die hohlen Abschnitte (62, 75, 96) miteinander verbunden sind.

2. Lageranordnung nach Anspruch 1, wobei jedes der kleinen Öllöcher (81, 57, 102) ein Ende aufweist, das an der entsprechenden Außenumfangsoberfläche (17a, 61a, 93a) der Wellenabschnitte (17, 61, 93) mündet.

3. Lageranordnung nach Anspruch 1, wobei die Kurbelwelle (18) eine zusammengefügte Kurbelwelle ist, die aus vier Wellen (51, 52, 53, 54) besteht, die der Reihe nach in einer Richtung von einem Ende der Kurbelwelle zum gegenüberliegenden Ende der Kurbelwelle zusammengefügt werden, so dass ein Wellenabschnitt (61, 17, 93) in ein Passloch (52a, 53a, 105a) einer benachbarten Welle (52, 53, 54) eingesetzt wird.

## Revendications

1. Structure de palier comprenant :
des parties de palier (25, 56, 88) ;
des parties d'arbre (17, 61, 93) d'un vilebrequin (18) qui constituent une partie d'un moteur à combustion interne, les parties d'arbre étant situées sur des parties correspondant aux parties de palier; et
des paliers flottants (31, 58, 92), chacun étant formé en une pièce unique et disposé entre la partie d'arbre et la partie de palier, les paliers flottants comprenant chacun des films d'huile (127, 132) formés respectivement sur un côté de la partie d'arbre et sur un côté des parties de palier, dans lesquels une partie d'arbre est un maneton (17) du vilebrequin (18) et dans lesquels la partie de palier est une tête (25) d'une bielle (16) ; et dans lesquels deux autres parties d'arbre sont des portées (61, 93) du vilebrequin et les parties de palier sont des parties de palier principales (56, 88) disposées sur un côté d'un bloc cylindres,
**caractérisée en ce que** des parties creuses (75, 62, 96) sont définies dans chaque partie d'arbre (17, 61, 93), et **en ce qu'**une pluralité de petits orifices de passage d'huile (81, 67, 102) s'étendent vers l'intérieur à partir d'une surface périphérique externe (17a, 61a, 93a) de chaque partie d'arbre (17, 61, 93) et s'ouvre vers la partie creuse respective (75, 62, 96),
dans laquelle chaque partie d'arbre (61, 17, 93) comprend un trou traversant (64, 77, 98) formé sur une partie d'extrémité de pointe de celle-ci et s'ouvre vers la partie creuse (62, 75, 96) et un orifice de passage d'huile (65, 78, 101) formé sur la partie d'extrémité de pointe opposée de celle-ci et s'ouvre vers la partie creuse (62, 75, 96) de telle sorte que les parties creuses (62, 75, 96) sont en connexion les unes avec les autres.

2. Structure de palier selon la revendication 1, dans laquelle chacun des petits orifices de passage d'huile (81, 67, 102) comprend une ouverture d'extrémité située à la surface périphérique externe respective (17a, 61a, 93a) des parties d'arbre (17, 61, 93).

3. Structure de palier selon la revendication 1, dans laquelle le vilebrequin (18) est un vilebrequin assemblé se composant de quatre arbres (51, 52, 53, 54) montés dans l'ordre dans une direction qui part d'une extrémité du vilebrequin jusqu'à l'extrémité opposée du vilebrequin, de telle sorte qu'une partie d'arbre (61, 17, 93) est montée dans un orifice de montage (52a, 53a, 105a) d'un arbre adjacent (52, 53, 54).
